# EUROPÄISCHE PATENTANMELDUNG

(11) **EP 4 261 017 A1**
(43) Veröffentlichungstag der Anmeldung: **18.10.2023**
(21) Anmeldenummer: 22168207.3
(22) Anmeldetag: 13.04.2022
(51) Int. Cl.: B29C 65/08, B23K 20/10

(54) **WERKZEUG, VERFAHREN ZUM SCHWEISSEN UND GESCHWEISSTES WERKSTÜCK**

(71) Anmelder: Telsonic Holding AG, 9552 Bronschhofen (CH)
(72) Erfinder: Mostafavi, Shimaalsadat, 8404 Winterthur (CH)
(74) Vertreter: Hepp Wenger Ryffel AG

(57) **Zusammenfassung**

Offenbart ist ein Werkzeug (10) zum Schweissen eines Werkstücks (21) mittels Reibschweissens, insbesondere mittels Ultraschalls, wobei das Werkzeug (10) eine Arbeitsfläche (5) aufweist, welche mindestens eine, bevorzugt mehrere Rillen (6) enthält. Die Arbeitsfläche (5) weist eine Wölbung auf. Die Erfindung betrifft ebenfalls ein Verfahren zum Schweissen eines Werkstücks und ein geschweisstes Werkstück.

## Beschreibung

Die vorliegende Erfindung befasst sich mit Werkzeugen, insbesondere Sonotroden, zum Schweissen von Werkstücken mittels Reibschweissens, mit Verfahren zum Schweissen eines Werkstücks unter Verwendung eines solchen Werkstücks sowie mit geschweissten Werkstücken.

Eine typische Anwendung solcher Sonotroden ist das Verschweissen von Komponenten von Batteriezellen. Die bekannten Sonotroden haben Schweissflächen, die üblicherweise mit einer Rändelung ausgestattet sind. Dabei kommt es oft zur Bildung von unerwünschten Metallpartikeln (sogenannten Whiskers), die beispielsweise zu Kurzschlüssen führen können. Eine andere Anwendung ist das Schweissen von Kontaktstellen von IGBT-Modulen (IGBT: Insulated-Gate Bipolar Transistors). Auch dort können Metallpartikel Schaden anrichten.

Es ist eine Aufgabe der vorliegenden Erfindung, die genannten Nachteile auszuräumen. Insbesondere soll also beim Reibschweissen und insbesondere Ultraschallschweissen von Metallen die Bildung von störenden Metallpartikeln möglichst verhindert werden. Die gleiche Problematik soll auch beim Reibschweissen von Kunststoffen behoben werden, insbesondere von metallisierten oder kohlefaserverstärkten Kunststoffen.

In einem ersten Aspekt der Erfindung wird diese Aufgabe gelöst durch ein Werkzeug zum Schweissen eines Werkstücks mittels Reibschweissens, insbesondere mittels Ultraschalls. Bei dem Werkzeug kann es sich um eine Sonotrode oder einen Amboss handeln. Das Werkzeug weist eine Arbeitsfläche auf, insbesondere eine Schweissfläche. Die Arbeitsfläche enthält mindestens eine Rille. Erfindungsgemäss weist die Arbeitsfläche eine Wölbung auf.

Wie sich in Versuchsreihen gezeigt hat, sorgt eine derartige Geometrie der Arbeitsfläche für eine erhebliche Reduktion sowohl von ungebundenen als auch von anhaftenden Metallpartikeln oder von Kohlenstoffpartikeln. Ohne dass die Erfindung darauf zu beschränken wäre, wird derzeit davon ausgegangen, dass der beim Schweissen entstehende Materialfluss des Werkstücks gezielt in Richtung der Rillen geführt wird. Die Wölbung der Arbeitsfläche bewirkt dabei, dass zunächst nur ein Teil der Arbeitsfläche in Kontakt mit dem Werkstück gerät, sodass lokal der Druck auf das Werkstück erhöht wird. Dies führt zu einer klassischen Verformung und einem Materialfluss. Die Rillen leiten das erweichte Material des Werkstücks gezielt von der Schweissstelle ab und bilden Materialstränge, die sich während und auch nach dem Schweissen nicht ohne weiteres ablösen lassen. Metallpartikel oder Kohlenstoffpartikel werden in diese Materialstränge eingebunden und können sich nicht mehr lösen. Trotzdem können mit dem erfindungsgemässen Verfahren Schweissverbindungen hergestellt werden, die hohen Ausreisskräften standhalten.

Die Sonotrode kann eine Längsachse aufweisen, bezüglich deren die Sonotrode zu torsionalen Ultraschallschwingungen anregbar ist. Die Arbeitsfläche kann im Wesentlichen senkrecht zur Längsachse ausgerichtet sein. Des Weiteren kann sich die mindestens eine Rille im Wesentlichen in bezüglich der Längsachse radialer Richtung erstrecken. Alternativ kann es sich auch um eine Sonotrode handeln, die zu linearen Schwingungen anregbar ist, wobei die Schweissfläche bei bestimmungsgemässer Benutzung entlang einer Oberfläche des Werkstücks schwingt. In diesem Fall können die Rillen parallel oder quer zur Schwingungsrichtung verlaufen.

In einer derzeit bevorzugten Ausführungsform weist die Arbeitsfläche zumindest abschnittsweise eine konvexe Wölbung auf. Insbesondere kann die gesamte Arbeitsfläche eine konvexe Wölbung aufweisen. Dies führt dazu, dass beim Schweissen zunächst ein mittlerer Abschnitt der Arbeitsfläche in Kontakt mit dem Werkstück gerät und das Material des Werkstücks entlang der Rillen radial nach aussen geleitet wird. Es ist bevorzugt, wenn sich die mindestens eine Rille bis zum Mittelpunkt der Arbeitsfläche erstreckt.

Alternativ ist es aber auch möglich, dass die Arbeitsfläche zumindest abschnittsweise eine konkave Wölbung aufweist. Insbesondere kann die gesamte Arbeitsfläche eine konkave Wölbung aufweisen. In dieser Variante gerät zunächst ein äusserer Bereich der Arbeitsfläche in Kontakt mit dem Werkstück, und die Rillen sorgen für einen Materialfluss in radiale Richtung nach innen. Hierzu ist es bevorzugt, wenn sich die mindestens eine Rille bis zum Aussenumfang der Arbeitsfläche erstreckt, insbesondere in radiale Richtung.

Die Arbeitsfläche kann eine Wölbungshöhe im Bereich von 0,1 mm bis 0,3 mm aufweisen. Hierunter wird die Höhe der Wölbung in einer Projektion entlang der Längsachse verstanden.

Alternativ oder zusätzlich kann die Arbeitsfläche einen Wölbungsradius im Bereich von 0,5 mm bis 20 mm aufweisen. Insbesondere kann der Wölbungsradius im Fall einer konvexen Wölbung im Bereich von 6 mm bis 12 mm liegen, im Fall einer konkaven Wölbung im Bereich von 12 mm bis 20 mm. Der Wölbungsradius kann auch gleich dem halben Durchmesser der Arbeitsfläche sein; die Arbeitsfläche ist dann halbkugelförmig.

Die mindestens eine Rille kann zumindest abschnittsweise eine Tiefe im Bereich von 0,2 mm bis 0,5 mm aufweisen. Insbesondere kann die Tiefe der Rille im Fall einer konvexen Wölbung der Arbeitsfläche im Bereich von 0,3 mm bis 0,4 mm liegen, im Fall einer konkaven Wölbung der Arbeitsfläche im Bereich von 0,4 mm bis 0,5 mm.

Die mindestens eine Rille kann zumindest abschnittsweise eine Breite im Bereich von 0,4 mm bis 0,6 mm aufweisen. Insbesondere kann die Breite der Rille im Fall einer konvexen Wölbung der Arbeitsfläche im Bereich von 0,4 mm bis 0,5 mm liegen, im Fall einer konkaven Wölbung der Arbeitsfläche im Bereich von 0,45 mm bis 0,55 mm.

Im Bereich mindestens eines ihrer Enden, insbesondere in einem Mittelpunkt und/oder an einem Aussenumfang der Schweissfläche, kann die Tiefe und/oder die Breite der Rille kleiner sein als in ihrem mittleren Bereich.

Die Rille kann beispielsweise mit einem Fräser in die Arbeitsfläche eingebracht werden und gegen ihr Ende hin auslaufen.

Die Arbeitsfläche kann beispielsweise 8 bis 12, insbesondere 10 bis 12 Rillen aufweisen. Dabei sind die Rillen bevorzugt gleichmässig in Umfangsrichtung über den gesamten Umfang verteilt. Wie sich in Versuchen gezeigt hat, ist im Fall einer konvexen Wölbung der Effekt des Materialfliessens geringer als im Falle einer konkaven Wölbung. Daher empfiehlt sich im Fall einer konvexen Wölbung tendenziell eine grössere Anzahl von Rillen.

Die Arbeitsfläche kann einen senkrecht zur Längsachse gemessenen Durchmesser im Bereich von 1 mm bis 8 mm, bevorzugt von 1,5 mm bis 6 mm aufweisen.

Es ist aber auch denkbar, einen Amboss mit einer Krümmung und mit Rillen entsprechend auszugestalten, um auf Seiten eines Ambosses vorhandene Partikel zu binden.

Die Sonotrode kann beispielsweise aus Stahl, Titan oder einem Hartmetall bestehen.

Ein weiterer Aspekt der Erfindung betrifft ein Verfahren zum Schweissen eines Werkstücks mittels Ultraschalls mit einem Werkzeug mit einer gewölbten Arbeitsfläche, die mit Rillen versehen ist, aber auch mit Werkstücken, die eine 3-dimensionale Oberfläche mit Strukturmerkmalen aufweisen, die ein Fliessen des aufgeweichten Materials erlauben. Das Verfahren erfolgt insbesondere unter Verwendung eines wie oben beschriebenen Werkzeugs, insbesondere einer wie oben beschriebenen Sonotrode. Das Verfahren enthält einen Schritt, in dem die Arbeitsfläche des Werkzeugs mit dem Werkstück in Kontakt gebracht wird und das Werkzeug, insbesondere, die Sonotrode, zu Schwingungen angeregt wird, sodass das Werkstück geschweisst wird, insbesondere mit einem weiteren, zweiten Werkstück verschweisst wird. Gemäss dem Verfahren wird bei der Verschweissung das Material des Werkstücks aufgeweicht und entlang der Rillen oder entlang der Strukturmerkmale an der Oberfläche des Werkstücks verdrängt. Durch diesen Materialfluss werden allfällige Partikel in eine Materialanhäufung, insbesondere in einem Strang eingebunden, der durch den Durchtritt des aufgeschmolzenen Materials entlang der Rille oder durch eine Bewegung entlang der Strukturmerkmale gebildet wird.

Bei der Durchführung dieses Verfahrens resultieren die oben erläuterten Vorteile.

Das Werkstück kann aus einem Metall wie beispielsweise Aluminium bestehen. Insbesondere kann es sich um Aluminium vom Typ H14 handeln. Es hat sich gezeigt, dass aufgrund der Materialeigenschaften und insbesondere der Fliesseigenschaften mit diesem Aluminiumtyp im Vergleich zu anderen Aluminiumtypen noch bessere Resultate erzielbar sind. Alternativ kann das Metall beispielsweise auch Kupfer sein. Um den Effekt des Materialfliessens zu erhöhen, kann weicheres Kupfer mit einer eher niedrige Streckgrenze eingesetzt werden. In noch einer weiteren Variante kann das Werkstück auch aus einem Kunststoff bestehen, insbesondere aus einem mit Metall- oder Kohlestoffpartikeln versehenen Kunststoff.

In einigen Anwendungen handelt es sich bei dem Werkstück um einen Anschlusskontakt und bei dem zweiten Werkstück um einen Aufnahmebehälter einer Batterie, an den der Anschlusskontakt anzuschweissen ist.

In einem dritten Aspekt betrifft die Erfindung auch ein aus mehreren Teilen durch Schweissen zusammengesetztes Werkstück, welches durch ein oben beschriebenes Verfahren erhalten oder erhältlich ist. Das geschweisste Werkstück verfügt somit über eine Schweissstelle, deren Geometrie derjenigen der Arbeitsfläche des Werkzeugs entspricht. Insbesondere enthält das zusammengesetzte Werkstück und insbesondere die Schweissstelle also Materialanhäufungen, in welche Metallpartikel (insbesondere Whiskers) oder andere Partikel eingebunden sind. Bei den Materialanhäufungen handelt es sich insbesondere um Rippen, die sich bevorzugt in einer radialen Richtung erstrecken. Wie bereits erläutert wurde, enthält ein solches erfindungsgemäss geschweisstes Werkstück deutlich weniger anhaftende Partikel, insbesondere Metallpartikel.

Das Werkstück kann aus einem Metall wie beispielsweise Aluminium, insbesondere Aluminium vom Typ H14, oder aus Kupfer bestehen.

Im Folgenden wird die Erfindung anhand zweier Ausführungsbeispiele und Zeichnungen näher erläutert. Dabei zeigen:
- Figur 1:: eine erste erfindungsgemässe Sonotrode in einer perspektivischen Ansicht;
- Figur 2a:: eine Schweissfläche der ersten erfindungsgemässen Sonotrode in einer perspektivischen Detailansicht;
- Figur 2b:: die Schweissfläche der ersten erfindungsgemässen Sonotrode in einer seitlichen Detailansicht;
- Figur 2c:: die Schweissfläche der ersten erfindungsgemässen Sonotrode in einer Draufsicht;
- Figur 3a:: eine Schweissfläche einer zweiten erfindungsgemässen Sonotrode in einer perspektivischen Detailansicht;
- Figur 3b:: die Schweissfläche der zweiten erfindungsgemässen Sonotrode in einer seitlichen Detailansicht;
- Figur 3c:: die Schweissfläche der zweiten erfindungsgemässen Sonotrode in einer Draufsicht;
- Figur 4:: eine Darstellung einer mit einer nicht erfindungsgemässen Sonotrode erzeugten Schweissverbindung;
- Figur 5a:: eine Darstellung einer mit der ersten erfindungsgemässen Sonotrode erzeugten Schweissverbindung;
- Figur 5b:: eine Darstellung einer mit der zweiten erfindungsgemässen Sonotrode erzeugten Schweissverbindung.

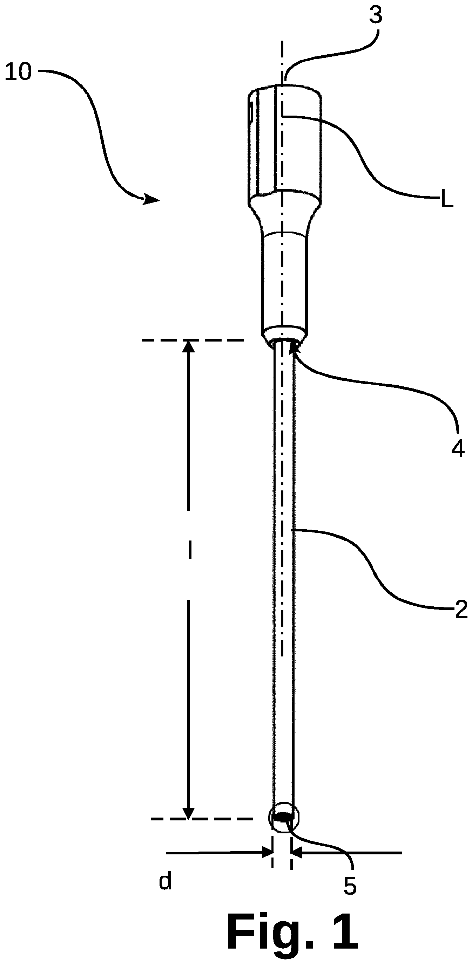

Die Figur 1 zeigt eine erste erfindungsgemässe Sonotrode 10. Sie verfügt über einen Grundkörper 1 mit einer Einkoppelfläche 3 zum Einkoppeln von Ultraschallschwingungen und einen sich entlang einer Längsachse L erstreckenden Bearbeitungsstift 2 mit einer Schweissfläche 5 zum Abgeben der Ultraschallschwingungen an ein hier nicht gezeigtes Werkstück. Die Schweissfläche 5 ist an einer dem Grundkörper 1 gegenüberliegenden Stirnfläche des Bearbeitungsstifts 2 angeordnet. Der Bearbeitungsstift 2 ist durch Einpressen in eine im Grundkörper 1 gebildete Einpressöffnung 4 mit dem Grundkörper 1 verbunden. Alternativ könnte die Verbindung beispielsweise durch Laserschweissen geschaffen sein.

Der Bearbeitungsstift 2 ist insgesamt kreiszylinderförmig ausgebildet. Er kann eine Dicke im Bereich von beispielsweise 1,5 mm bis 6 mm aufweisen. Besteht der Bearbeitungsstift 2 aus Stahl, so kann er beispielsweise eine Länge 1 von 80 mm oder 160 mm aufweisen, was einer halben bzw. ganzen Wellenlänge bei einer Resonanzfrequenz von 20 kHz entspricht. Besteht der Bearbeitungsstift 2 hingegen beispielsweise aus einem Hartmetall wie etwa Wolframcarbid, so beträgt die halbe Wellenlänge bei der genannten Frequenz etwa 130 mm. Im hier gezeigten Ausführungsbeispiel besteht der Grundkörper 1 aus Titan und hat eine Länge, die in diesem Beispiel der halben Wellenlänge in diesem Material entspricht.

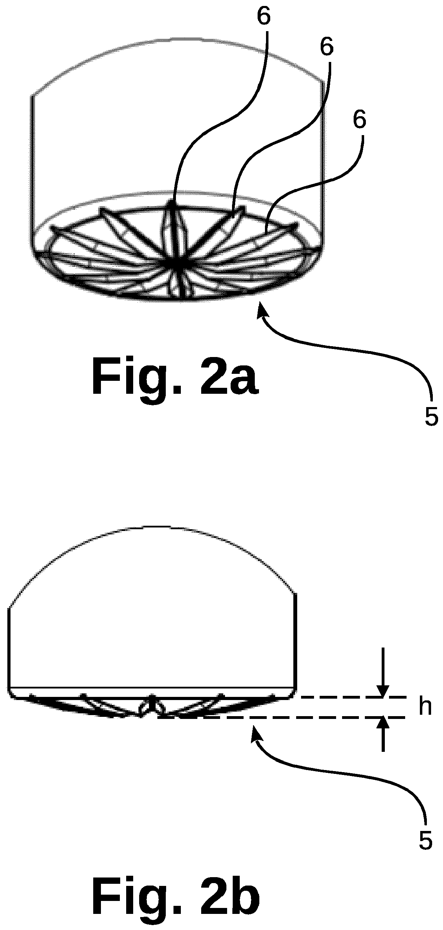

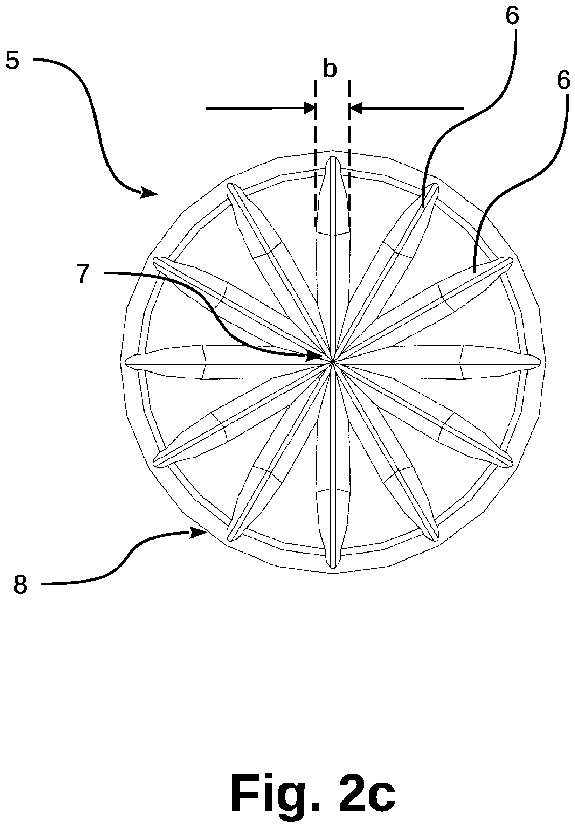

Die Figuren 2a bis 2c zeigen die Schweissfläche 5 im Detail. Die gesamte Schweissfläche 5 weist eine konvexe Wölbung mit einem Wölbungsradius von 9 mm und einer Wölbungshöhe von 0,2 mm auf. In der Schweissfläche 5 sind 12 in Umfangsrichtung über den gesamten Umfang gleichmässig verteilte Rillen 6 ausgebildet, die sich in radialer Richtung erstrecken, und zwar von einem Mittelpunkt 7 bis zum Aussenumfang 8 der Schweissfläche 5. Die Rillen 6 haben am Mittelpunkt 7 eine Tiefe von 0,36 mm und weisen eine Breite von 0,45 mm auf und laufen zum Aussenumfang 8 hin aus.

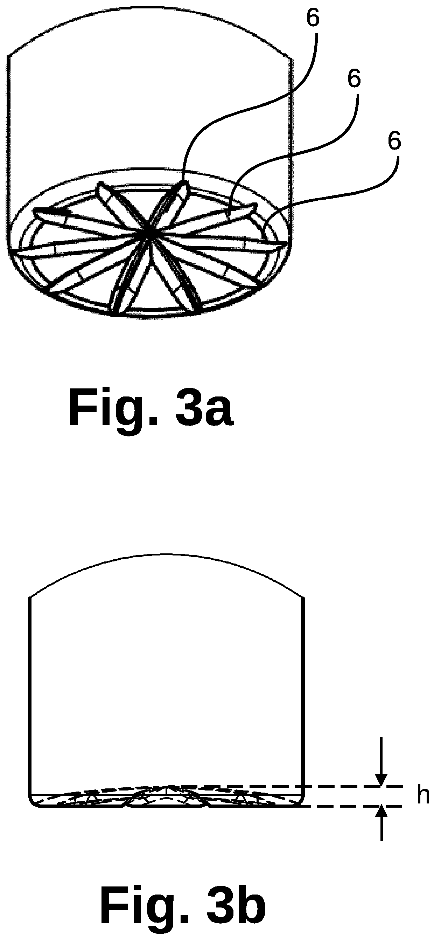

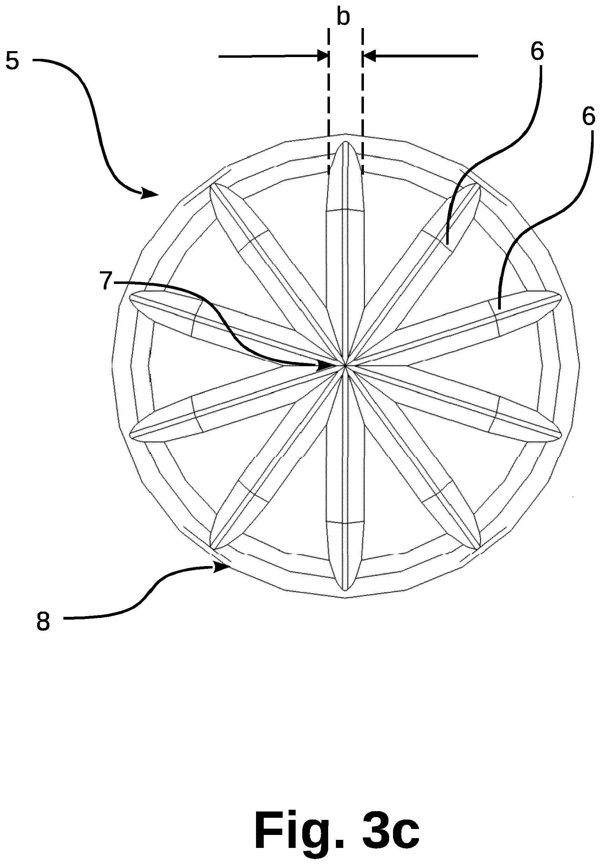

Die Figuren 3a bis 3c zeigen eine zweite Ausführungsform, bei der jedoch die Schweissfläche 5 konkav gewölbt ist und nur 10 Rillen 6 enthält. Die Rillen 6 haben am Aussenumfang 8 eine Tiefe von 0,42 mm und eine Breite von 0,49 mm und laufen zum Mittelpunkt 7 hin aus.

Abweichend von den oben beschriebenen Ausführungsformen kann die Sonotrode natürlich auch einstückig ausgebildet sein.

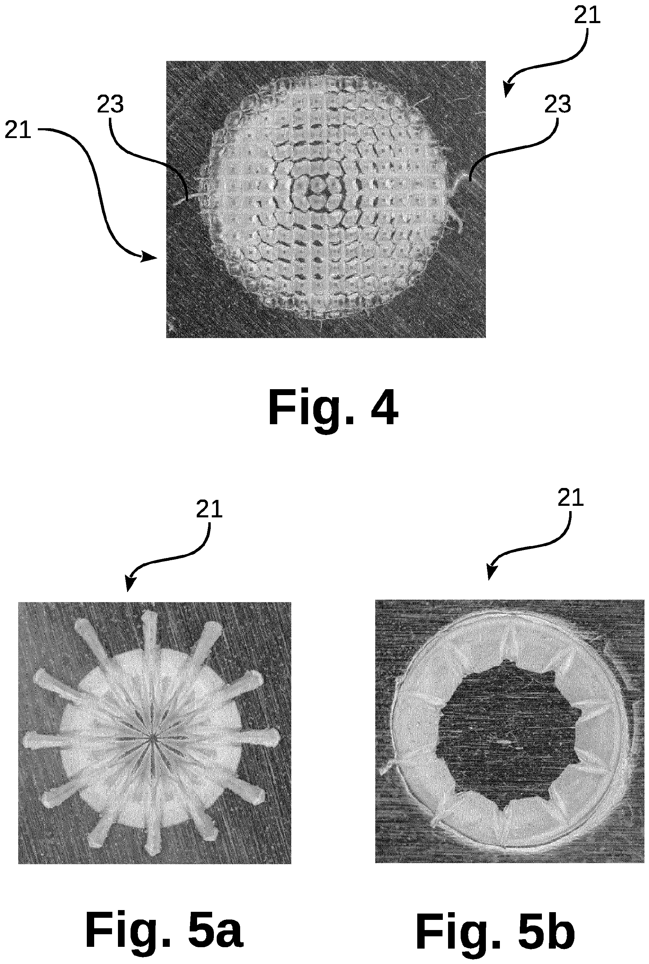

Die Figuren 4 bis 5a zeigen Ausschnitte von geschweissten Werkstücken 21, die mit nicht erfindungsgemässen bzw. mit erfindungsgemässen Sonotroden geschweisst wurden.

In Figur 4 ist eine Schweissstelle dargestellt, die mit einer herkömmlichen Sonotrode geschweisst wurde, die eine im Wesentlichen ebene Schweissfläche mit einer Rändelung hat. Am Rand der Schweissstelle sind mehrere unerwünschte Metallpartikel 23 ("Whiskers") zu sehen, die zu Qualitätsproblemen führen können.

Die in Figur 5a wiedergegebene Schweissstelle wurde mit der ersten erfindungsgemässen Sonotrode gemäss Figuren 2a bis 2c erzeugt. Das Bild lässt eindeutig erkennen, dass die Sonotrode aufgrund ihrer konvexen Wölbung nur in einem mittleren Bereich in Kontakt mit dem Werkstück 21 war. Die Rillen der Sonotrode haben einen beim Schweissen entstandenen Materialfluss radial nach aussen zur dickeren Materialsträngen geformt, die sich auch nach dem Schweissen nicht ohne weiteres ablösen lassen und in welche Metallpartikel eingebunden sind.

Die in Figur 5b gezeigte Schweissstelle wurde mit der zweiten erfindungsgemässen Sonotrode gemäss Figuren 3a bis 3c hergestellt. Wie sich dem Foto entnehmen lässt, war die Sonotrode hier aufgrund der konkaven Wölbung der Schweissfläche nur in ihrem Aussenbereich im Kontakt mit dem Werkstück 21.

Mit einer Sonotrode mit konvex gewölbter Schweissfläche wurden Schweissungen mit den unten aufgeführten Eingangsparametern Amplitude, Energie und Druck durchgeführt. Es ergaben sich bei mindestens 10 Versuchen Schweisszeiten im Bereich von 220 ms bis 240 ms und Spitzenleistungen im Bereich von 240 W bis 280 W, wobei nur in einem Fall ein "Whisker" entstand. Die Schweissungen hielten Abziehkräften im Bereich von 10 N bis über 140 N stand.

Wenn die Werkstücke vor dem Schweissen gereinigt wurden, ergaben sich in 10 Versuchen ebenfalls keine oder nur wenige "Whiskers", aber die Schweissungen hielten durchgängig sogar Abziehkräften von mehr als etwa 60 N stand.

Mit einer Sonotrode mit konkav gewölbter Schweissfläche wurden Schweissungen mit den unten aufgeführten Eingangsparametern Amplitude, Energie und Druck durchgeführt. Es ergaben sich Schweisszeiten im Bereich von 90 ms bis 100 ms und Spitzenleistungen im Bereich von 450 W bis 550 W, wobei in 10 Versuchen höchstens drei "Whiskers" entstanden. Die Schweissungen hielten Abziehkräften im Bereich von etwa 50 N bis etwa 190 N stand.

Wenn die Werkstücke vor dem Schweissen gereinigt wurden, hielten die Schweissungen durchgängig Abziehkräften von mehr als 140 N stand.

Zum Schweissen mit konvex gewölbter Schweissfläche hat sich die folgende Parameterkombination als besonders günstig erwiesen:
- Amplitude: 90 % der maximal mit der Sonotrode erreichbaren Amplitude;
- Druck: 3 bar;
- Energie: 40 Ws;
- Triggerzeit: 200 ms;
- Mittlere Zeit: 230 ms.

Zum Schweissen mit konkav gewölbter Schweissfläche hat sich die folgende Parameterkombination als günstig erwiesen:
- Amplitude: 75 % der maximal mit der Sonotrode erreichbaren Amplitude;
- Druck: 5 bar;
- Energie: 30 Ws;
- Triggerzeit: 200 ms.

## Patentansprüche

1. Werkzeug (10) zum Schweissen eines Werkstücks (21) mittels Reibschweissens, insbesondere mittels Ultraschalls, wobei das Werkzeug (10) eine Arbeitsfläche (5) aufweist, welche mindestens eine, bevorzugt mehrere Rillen (6) enthält, **dadurch gekennzeichnet, dass**
die Arbeitsfläche (5) eine Wölbung aufweist.

2. Werkzeug (10) gemäss Anspruch 1,
wobei das Werkzeug (10) eine Sonotrode (10) zum Schweissen eines Werkstücks (21) ist und die Arbeitsfläche (5) eine Schweissfläche (5) bildet.

3. Sonotrode (10) gemäss Anspruch 2,
wobei die Sonotrode (10) eine Längsachse (L) aufweist, bezüglich deren sie zu torsionalen Ultraschallschwingungen anregbar ist.

4. Sonotrode (10) gemäss Anspruch 3,
wobei sich die mindestens eine Rille (6) im Wesentlichen in bezüglich der Längsachse (L) radialer Richtung erstreckt.

5. Sonotrode (10) gemäss einem der Ansprüche 1 bis 4,
wobei die Arbeitsfläche (5) zumindest abschnittsweise, insbesondere die gesamte Arbeitsfläche (5) eine konvexe Wölbung aufweist.

6. Sonotrode (10) gemäss einem der Ansprüche 1 bis 4,
wobei die Arbeitsfläche (5) zumindest abschnittsweise, insbesondere die gesamte Arbeitsfläche (5) eine konkave Wölbung aufweist.

7. Sonotrode (10) gemäss einem der vorangehenden Ansprüche, wobei sich die mindestens eine Rille (9) bis zum Mittelpunkt (7) der Arbeitsfläche (9) erstreckt.

8. Sonotrode (10) gemäss einem der vorangehenden Ansprüche, wobei sich die mindestens eine Rille (6) bis zum Aussenumfang (8) der Arbeitsfläche (5) erstreckt, insbesondere in radialer Richtung.

9. Sonotrode (10) gemäss einem der vorangehenden Ansprüche, wobei die Arbeitsfläche (5) 8 bis 16, insbesondere 10 bis 12 Rillen (6) aufweist, die bevorzugt gleichmässig in Umfangsrichtung verteilt sind.

10. Verfahren zum Schweissen eines Werkstücks (21), insbesondere mittels Ultraschalls, unter Verwendung eines Werkzeugs (10) mit einer gewölbten Arbeitsfläche, die mit Rillen (6) versehen ist und/oder unter Verwendung eines Werkstückes, das eine 3-Dimensionale Oberfläche mit Strukturmerkmalen aufweist, insbesondere einer Sonotrode (10), gemäss einem der vorangehenden Ansprüche, enthaltend einen Schritt, in dem eine Arbeitsfläche (5) des Werkzeugs (10) mit dem Werkstück (21) in Kontakt gebracht wird und das Werkzeug (10) zu Schwingungen angeregt wird, sodass das Werkstück (21) geschweisst, insbesondere mit einem weiteren Werkstück verschweisst wird, wobei das Material des Werkstücks mindestens teilweise aufgeweicht und entlang der Rillen (6) oder entlang der Strukturmerkmalen an der Oberfläche des Werkstücks verdrängt wird, so dass durch den Materialfluss Partikel in eine Materialanhäufung eingebunden werden, die durch den Durchtritt des aufgeschmolzenen Materials entlang der Rille (6) oder durch eine Bewegung entlang der Strukturmerkmale gebildet wird.

11. Verfahren gemäss Anspruch 10,
wobei das Werkstück (21) aus einem Metall wie beispielsweise Aluminium, insbesondere Aluminium vom Typ H14, oder Kupfer besteht.

12. Verfahren gemäss einem der Ansprüche 10 und 11,
wobei das Werkstück (21) ein Anschlusskontakt einer Batterie und das weitere Werkstück ein Aufnahmebehälter einer Batterie ist.

13. Geschweisstes Werkstück (21), erhalten oder erhältlich durch ein Verfahren gemäss einem der Ansprüche 10 bis 12.

14. Geschweisstes Werkstück (21) gemäss Anspruch 13,
wobei das Werkstück (21) aus einem Metall wie beispielsweise Aluminium, insbesondere Aluminium vom Typ H14, oder Kupfer besteht.

15. Geschweisstes Werkstück (21), mit einer Schweissstelle, insbesondere Werkstück (21) nach Anspruch 13 oder 14, wobei das Werkstück (21) und insbesondere die Schweissstelle Materialanhäufungen aufweist, in welche Metallpartikel eingebunden sind, wobei die Materialanhäufungen Rippen sind, die sich bevorzugt in einer radialen Richtung erstrecken.
